# FASCICULE DE BREVET EUROPEEN

(11) **EP 2 406 106 B1**
(45) Date de publication et mention de la délivrance du brevet: **06.11.2013**
(21) Numéro de dépôt: 10711434.0
(22) Date de dépôt: 11.03.2010
(51) Int. Cl.: B60R 5/04

(54) **ARCHITECTURE DE MONTAGE D'UNE TABLETTE DE RECOUVREMENT DU COMPARTIMENT À BAGAGES D'UN VÉHICULE AUTOMOBILE**
ARCHITEKTUR ZUR BEFESTIGUNG EINER ABDECKPLATTE IM KOFFERRAUM EINES FAHRZEUGS
ARCHITECTURE FOR MOUNTING A COVERING PANEL IN THE TRUNK OF AN AUTOMOBILE

(30) Priorité: 13.03.2009 FR 0901206
(43) Date de publication de la demande: 18.01.2012
(73) Titulaire: Centre d'étude et de recherche pour l'automobile (CERA), 51100 Reims (FR)
(72) Inventeur: BRILLON, Eric, F-51140 Treslon (FR)
(74) Mandataire: Sayettat, Julien Christian
(86) Numéro de dépôt international: PCT/FR2010/000205
(87) Numéro de publication internationale: WO 2010/103206

(56) Documents cités:
- EP-A- 0 041 016
- DE-A1- 19 813 751
- FR-A- 2 819 459
- GB-A- 1 514 334
- JP-A- 57 182 522

## Description

L'invention concerne une architecture de montage d'une tablette de recouvrement du compartiment à bagages d'un véhicule automobile.

Il est connu de réaliser une architecture de montage d'une tablette de recouvrement du compartiment à bagages d'un véhicule automobile, ledit véhicule étant pourvu d'un hayon articulé selon son bord supérieur au toit du véhicule, le bord avant de ladite tablette étant articulé par rapport au compartiment et son bord arrière étant relié audit hayon par au moins un organe de liaison - notamment sous forme de filin souple - de sorte que la tablette se relève lorsque le hayon est ouvert par rotation vers le haut, le relèvement de la tablette permettant de faciliter l'accès aux bagages.

Un tel agencement ne permet cependant pas d'offrir un accès optimal aux bagages, la tablette en position relevée, adoptant généralement un angle par rapport à l'horizontale compris entre 35 et 60°, pouvant toujours constituer une gêne pour accéder aux bagages.

Le document EP-A-0 041 016 décrit une architecture de montage d'une tablette selon le préambule de la revendication 1, nécessitant l'utilisation de moyens élastiques additionnels.

L'invention a pour but de pallier l'inconvénient susmentionné.

A cet effet, et selon un premier aspect, l'invention propose une architecture de montage d'une tablette de recouvrement du compartiment à bagages d'un véhicule automobile, ledit véhicule étant pourvu d'un hayon articulé selon son bord supérieur au toit du véhicule, le bord arrière de ladite tablette étant articulé audit hayon, caractérisé en ce que, le bord avant de ladite tablette est relié audit toit par au moins un organe de liaison dont les extrémités sont pivotantes, ladite architecture présentant :
- une configuration de recouvrement où ledit hayon est fermé et où ladite tablette est horizontale, ladite architecture en vue latérale formant sensiblement un parallélogramme dont tous les côtés sont sensiblement de même longueur et dont les sommets sont définis par lesdits bords avant et arrière de la tablette, ledit bord supérieur de hayon et le point d'accrochage dudit organe de liaison sur ledit toit,
- une configuration d'escamotage, obtenue par rotation vers le haut dudit hayon, où ladite tablette est relevée sensiblement contre ledit hayon et où ledit organe de liaison est ramené sensiblement contre ledit toit.

Dans cette description, les termes de positionnement dans l'espace (bas, supérieur, latéral, avant, arrière, vertical, horizontal, ...) sont pris en référence à l'architecture en place dans le véhicule.

L'agencement proposé permet, du fait du relèvement de la tablette sensiblement contre ledit hayon lorsque ce dernier est ouvert, un accès optimal aux bagages.

D'autres particularités et avantages de l'invention apparaîtront dans la description qui suit, faite en référence aux figures jointes dans lesquelles :

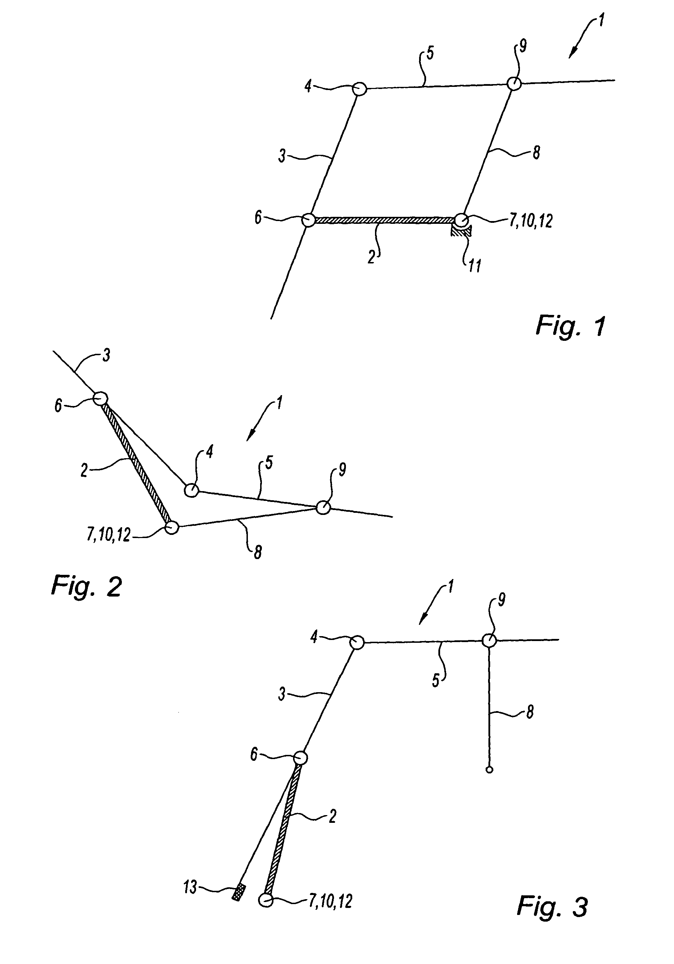

- la figure 1 est une représentation schématique en vue latérale d'une architecture en configuration de recouvrement,
- la figure 2 est une représentation similaire en configuration d'escamotage,
- la figure 3 est une représentation similaire en configuration de rangement.

En référence aux figures, on décrit une architecture 1 de montage d'une tablette 2 de recouvrement du compartiment à bagages d'un véhicule automobile, ledit véhicule étant pourvu d'un hayon 3 articulé selon son bord supérieur 4 au toit 5 du véhicule, le bord arrière 6 de ladite tablette étant articulé audit hayon et son bord avant 7 étant relié audit toit par au moins un organe de liaison 8 dont les extrémités sont pivotantes, ladite architecture présentant :
- une configuration de recouvrement où ledit hayon est fermé et où ladite tablette est horizontale, ladite architecture en vue latérale formant sensiblement un parallélogramme dont tous les côtés sont sensiblement de même longueur et dont les sommets sont définis par lesdits bords avant et arrière de la tablette, ledit bord supérieur de hayon et le point d'accrochage 9 dudit organe de liaison 8 sur ledit toit,
- une configuration d'escamotage, obtenue par rotation vers le haut dudit hayon, où ladite tablette est relevée sensiblement contre ledit hayon-soit directement contre soit avec un écart faible entre les deux, par exemple de l'ordre d'une dizaine de centimètres - et où ledit organe de liaison est ramené sensiblement contre ledit toit.

Selon une réalisation, l'organe de liaison 8 est sous forme d'un filin souple.

Selon une réalisation, l'architecture 1 comprend deux organes de liaison associés respectivement à proximité des coins avant 12 de la tablette.

Selon une réalisation non représentée, la tablette 1 comprend un cadre périphérique rigide à l'intérieur duquel est monté un rideau, par exemple à base de textile non tissé.

Au moins une patte périphérique issue de matière du bord arrière du rideau peut être prévue, ladite patte étant solidarisée au hayon 3 et formant moyen d'articulation souple de la tablette 2 audit hayon.

Une telle réalisation permet de façon particulièrement simple de réaliser une articulation permettant une rotation d'environ 180° permettant de passer de la configuration d'escamotage à la configuration de rangement décrite plus loin.

Le rideau peut être conformé pour présenter une géométrie non plane, notamment par thermoformage, par exemple en forme de cuvette permettant de contenir des objets.

Selon la réalisation représentée, l'architecture 1 comprend au moins un moyen de maintien 10 réversible de ladite architecture en configuration de recouvrement, ledit moyen étant disposé ici sur le bord avant 7 de la tablette 2, ledit moyen étant destiné à coopérer avec un moyen réciproque 11 solidaire de la structure du véhicule, disposé par exemple sur les garnitures latérales du compartiment à bagages.

Selon une réalisation, le moyen de maintien 10 comprend un élément magnétique.

Ainsi, lors du passage de la configuration d'escamotage à la configuration de recouvrement, la tablette 2 se repositionne de façon optimale, son bord avant 7 étant attiré vers la position qu'il doit occuper.

Par ailleurs, lors du passage de la configuration de recouvrement à la configuration d'escamotage, le moyen 10 qui est réversible se désolidarise du moyen réciproque 11 du simple fait de la traction exercée entre les deux par relèvement du hayon 3.

Selon une réalisation, l'architecture 1 comprend deux moyens de maintien 10 disposés à proximité des coins avant 12 de la tablette 2.

Selon la réalisation représentée, l'architecture 1 présente en outre une configuration de rangement obtenue par rotation de la tablette 2 vers le bas autour de son bord arrière 6 pour adopter une position sensiblement verticale, notamment contre le hayon 3.

Le passage de la configuration de recouvrement à la configuration de rangement se fait après avoir désolidarisé l'organe de liaison 8 du bord avant 7 de la tablette 2.

Selon la réalisation représentée, l'architecture 1 comprend un moyen complémentaire 13 de maintien en configuration de rangement, ledit moyen étant solidaire du hayon 3, ledit moyen étant agencé pour coopérer avec le moyen de maintien 10.

Selon une réalisation, l'articulation entre le bord arrière 6 de la tablette 2 et le hayon 3, et/ou la liaison entre l'organe 8 et le toit 5 ou la tablette 2, est agencée pour céder de façon réversible sous l'effet d'un effort seuil qui lui est appliqué vers le bas en configuration de recouvrement, ceci afin d'éviter une détérioration de ladite articulation lorsqu'une charge trop lourde est posée sur la tablette 2.

## Revendications

1. Architecture (1) de montage d'une tablette (2) de recouvrement du compartiment à bagages d'un véhicule automobile, ledit véhicule étant pourvu d'un hayon (3) articulé selon son bord supérieur (4) au toit (5) du véhicule, le bord arrière (6) de ladite tablette étant articulé audit hayon, **caractérisé en ce que**, le bord avant (7) de ladite tablette (2) est relié audit toit par au moins un organe de liaison (8) dont les extrémités sont pivotantes, ladite architecture présentant :
• une configuration de recouvrement où ledit hayon (3) est fermé et où ladite tablette (2) est horizontale, ladite architecture en vue latérale formant sensiblement un parallélogramme dont tous les côtés sont sensiblement de même longueur et dont les sommets sont définis par lesdits bords avant (7) et arrière (6) de la tablette (2), ledit bord supérieur (4) de hayon (3) et le point d'accrochage (9) dudit organe de liaison (8) sur ledit toit (5),
• une configuration d'escamotage, obtenue par rotation vers le haut dudit hayon (3), où ladite tablette est relevée sensiblement contre ledit hayon (3) et où ledit organe de liaison (8) est ramené sensiblement contre ledit toit (5).

2. Architecture (1) selon la revendication 1, **caractérisée en ce que** l'organe de liaison (8) est sous forme d'un filin souple.

3. Architecture (1) selon l'une quelconque des revendications 1 ou 2, **caractérisée en ce qu'**elle comprend deux organes de liaison (8) associés respectivement à proximité des coins avant (12) de la tablette (2).

4. Architecture (1) selon l'une quelconque des revendications 1 à 3, **caractérisée en ce que** la tablette (2) comprend un cadre périphérique rigide à l'intérieur duquel est monté un rideau.

5. Architecture (1) selon l'une quelconque des revendications 1 à 4, **caractérisée en ce qu'**elle comprend au moins un moyen de maintien (10) réversible de ladite architecture en configuration de recouvrement, ledit moyen de maintien (10) étant destiné à coopérer avec un moyen réciproque (11) solidaire de la structure du véhicule.

6. Architecture (1) selon la revendication 5, **caractérisée en ce que** le moyen de maintien (10) comprend un élément magnétique.

7. Architecture (1) selon l'une quelconque des revendications 5 ou 6, **caractérisée en ce qu'**elle comprend deux moyens de maintien (10) disposés à proximité des coins avant (12) de la tablette (2).

8. Architecture (1) selon l'une quelconque des revendications 1 à 7, **caractérisée en ce qu'**elle présente en outre une configuration de rangement obtenue par rotation de la tablette (2) vers le bas autour de son bord arrière (6) pour adopter une position sensiblement verticale.

9. Architecture (1) selon les revendications 5 et 8, **caractérisée en ce qu'**elle comprend un moyen complémentaire (13) de maintien en configuration de rangement, ledit moyen complémentaire (13) étant solidaire du hayon (3) et étant agencé pour coopérer avec le moyen de maintien (10).

10. Architecture (1) selon l'une quelconque des revendications 1 à 9, **caractérisée en ce que** l'articulation entre le bord arrière (6) de la tablette (2) et le hayon (3), et/ou la liaison entre l'organe (8) et le toit (5) ou la tablette (2), est/sont agencée/s pour céder de façon réversible sous l'effet d'un effort seuil qui lui/leur est appliqué vers le bas en configuration de recouvrement.

## Patentansprüche

1. Architektur (1) für die Montage einer Heckablage (2) zum Abdecken eines Gepäckraumes eines Kraftfahrzeugs, wobei das besagte Fahrzeug mit einer Heckklappe (3) versehen ist, die an ihrem oberen Rand (4) schwenkbar mit dem Dach (5) des Fahrzeugs verbunden ist, und der rückwärtige Rand (6) der besagten Ablage schwenkbar mit der besagten Heckklappe verbunden ist, **dadurch gekennzeichnet, dass** der vordere Rand (7) der besagten Ablage (2) über zumindest eine Verbindungsvorrichtung (8), deren Enden schwenkbar sind, mit dem besagten Dach verbunden ist und die Architektur folgendes aufweist:
- eine Abdeckungskonfiguration, bei der die besagte Heckklappe (3) geschlossen ist, und bei der die besagte Ablage (2) waagrecht liegt, wobei die besagte Architektur in der Seitenansicht in etwa ein Parallelogramm darstellt, dessen Seiten allesamt in etwa dieselbe Länge aufweisen und dessen Scheitelpunkte durch den besagten vorderen (7) und hinteren (6) Rand der Ablage (2), durch den besagten oberen Rand (4) der Heckklappe (3) und die Befestigungsstelle (9) der besagten Verbindungsvorrichtung (8) auf dem besagten Dach (5) definiert werden,
- eine Einzugskonfiguration, die man durch die Drehung der besagten Heckklappe (3) nach oben erhält, bei der die besagte Ablage in etwa gegen die besagte Heckklappe (3) angehoben wird, und bei der die besagte Verbindungsvorrichtung (8) in etwa gegen das besagte Dach (5) geschoben wird.

2. Architektur (1) nach Anspruch 1, **dadurch gekennzeichnet, dass** die Verbindungsvorrichtung (8) die Form einer flexiblen Schnur aufweist.

3. Architektur (1) nach irgendeinem der Ansprüche 1 oder 2, **dadurch gekennzeichnet, dass** sie zwei Verbindungsvorrichtungen (8) umfasst, die jeweils in der Nähe der vorderen Ecken (12) der Ablage (2) angeordnet sind.

4. Architektur (1) nach irgendeinem der Ansprüche 1 bis 3, **dadurch gekennzeichnet, dass** die Ablage (2) einen umlaufenden steifen Rahmen umfasst, innerhalb dessen ein Store montiert ist.

5. Architektur (1) nach irgendeinem der Ansprüche 1 bis 4, **dadurch gekennzeichnet, dass** sie zumindest eine umkehrbare Haltevorrichtung (10) der besagten Architektur in der Abdeckungskonfiguration umfasst, wobei die besagte Haltevorrichtung (10) dazu bestimmt ist, mit einer Gegenvorrichtung (11) zusammenzuwirken, die fest mit der Fahrzeugstruktur verbunden ist.

6. Architektur (1) nach Anspruch 5, **dadurch gekennzeichnet, dass** die Haltevorrichtung (10) ein magnetisches Element umfasst.

7. Architektur (1) nach irgendeinem der Ansprüche 5 oder 6, **dadurch gekennzeichnet, dass** sie zwei Haltevorrichtungen (10) umfasst, die in der Nähe der vorderen Ecken (12) der Ablage (2) angeordnet sind.

8. Architektur (1) nach irgendeinem der Ansprüche 1 bis 7, **dadurch gekennzeichnet, dass** sie darüber hinaus eine Verstaukonfiguration aufweist, die man durch die Abwärtsdrehung der Ablage (2) um ihren rückwärtigen Rand (6) erhält, um sie in eine in etwa senkrechte Stellung zu bringen.

9. Architektur (1) nach den Ansprüchen 5 und 8, **dadurch gekennzeichnet, dass** sie eine ergänzende Vorrichtung (13) zum Festhalten in der Verstaukonfiguration umfasst, wobei die besagte ergänzende Vorrichtung (13) fest mit der Heckklappe (3) verbunden, und so angeordnet ist, um mit der besagten Haltevorrichtung (10) zusammenzuwirken.

10. Architektur (1) nach irgendeinem der Ansprüche 1 bis 9, **dadurch gekennzeichnet, dass** das Gelenk zwischen dem rückwärtigen Rand (6) der Ablage (2) und der Heckklappe (3) und/ oder die Verbindung zwischen der Vorrichtung (8) und dem Dach (5) oder der Ablage (2) so angeordnet sind, um in umkehrbarer Form unter dem Einfluss einer grenzwertigen Kraft, die darauf ausgeübt wird, nach unten in die Abdeckungskonfiguration zu weichen.

## Claims

1. Architecture (1) for mounting a covering panel (2) in the boot of an automobile, said automobile being provided with a tailgate (3) hinged along its upper edge (4) to the roof (5) of the automobile, the rear edge (6) of said panel being hinged to said tailgate, **characterised in that**, the front edge (7) of said panel (2) is connected to said roof by at least one linking member (8) of which the ends are pivoting, said architecture having:
- a covering configuration in which said tailgate (3) is closed and wherein said panel (2) is horizontal, said architecture from a side view substantially forming a parallelogram in which all of the sides have a substantially equal length and of which the summits are defined by said front (7) and rear (6) edges of the panel (2), said upper edge (4) of the tailgate (3) and the fixation point (9) of said linking member (8) on said roof (5),
- a stowed configuration, obtained by rotating said tailgate (3) upwards, in which said panel is lifted substantially against said tailgate (3) and where said linking member (8) is brought substantially against said roof (5).

2. Architecture (1) according to claim 1, **characterised in that** the linking member (8) is in the form of a thin rope.

3. Architecture (1) according to any of claims 1 or 2, **characterised in that** it comprises two associated linking members (8) respectively in the vicinity of the front corners (12) of the panel (2).

4. Architecture (1) according to any of claims 1 to 3, **characterised in that** the panel (2) comprises a rigid peripheral frame inside of which is mounted a curtain.

5. Architecture (1) according to any of claims 1 to 4, **characterised in that** it comprises at least one reversible means of maintaining (10) said architecture in covering configuration, said means of maintaining (10) being intended to cooperate with a reciprocal means (11) that is integral with the structure of the automobile.

6. Architecture (1) according to claim 5, **characterised in that** the means for maintaining (10) comprise a magnetic element.

7. Architecture (1) according to any of claims 5 or 6, **characterised in that** it comprises two means for maintaining (10) arranged in the vicinity of the front corners (12) of the panel (2).

8. Architecture (1) according to any of claims 1 to 7, **characterised in that** it further has a stored configuration obtained by rotating the panel (2) downwards around its rear edge (6) in order to adopt a substantially vertical position.

9. Architecture (1) according to claims 5 and 8, **characterised in that** it comprises an additional means (13) for maintaining in stored configuration, said additional means (13) being integral with the tailgate (3) and being arranged in order to cooperate with the means of maintaining (10).

10. Architecture (1) according to any of claims 1 to 9, **characterised in that** the hinging between the rear edge (6) of the panel (2) and the tailgate (3), and/or the link between the member (8) and the roof (5) or the panel (2), are arranged to release in a reversible manner under the effect of a threshold force which is applied to them downwards in covering configuration.
